(19) Europäisches Patentamt
European Patent Office
Office européen des brevets

(11) **EP 2 752 776 A1**

(12) **EUROPEAN PATENT APPLICATION**
published in accordance with Art. 153(4) EPC

(43) Date of publication:
**09.07.2014 Bulletin 2014/28**

(51) Int Cl.:
**G06F 17/30** (2006.01)

(21) Application number: **12857138.7**

(22) Date of filing: **13.12.2012**

(86) International application number:
**PCT/CN2012/086562**

(87) International publication number:
**WO 2013/086998 (20.06.2013 Gazette 2013/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2011 CN 201110414467**

(71) Applicants:
• **Peking University Founder Group Co., Ltd**
 **Haidian District**
 **Beijing 100871 (CN)**
• **Peking University**
 **Beijing 100871 (CN)**

• **Beijing Founder Electronics Co., Ltd.**
 **Haidian District, Beijing 100085 (CN)**

(72) Inventors:
• **LIU, Zhichao**
 **Beijing 100085 (CN)**
• **YU, Xiaoming**
 **Beijing 100085 (CN)**
• **YANG, Jianwu**
 **Beijing 100085 (CN)**

(74) Representative: **Nederlandsch Octrooibureau**
 **P.O. Box 29720**
 **2502 LS The Hague (NL)**

(54) **METHOD AND DEVICE FOR NAMED-ENTITY RECOGNITION**

(57)    The present application discloses a method and a device for generating a recognizing model for recognizing named entities, and a method and a device for recognizing named entities. The method for recognizing named entities comprising: obtaining a first characteristic information set of a text to be trained; recognizing the first characteristic information set based on the first recognizing model to obtain a second characteristic information set which comprises M named entities obtained by recognizing the first characteristic information set through the first recognizing model, wherein M is an integer larger than or equal to 0; and performing error-correction on the M named entities in the second characteristic information set based on the error driving model to obtain K named entities, wherein K is an integer lager than or equal to 0 but less than or equal to M.

Fig.5

**Description**

<u>Technical Field</u>

The present application relates to an artificial intelligence field, in particular to a method and a device for recognizing named entities.

<u>Background</u>

As the computer network increasingly expands, a huge amount of information emerges in the form of electronic documents, and the Internet has become the carrier of the huge amounts of information. It is expected that the computers can extract useful information from the huge amounts of information. One of the main tasks in information extraction is to get the Named Entity Recognized (NER).

A named entity refers to a named, uniquely determined, meaningful minimum information unit-specified name and quantitative phrase. Generally, there are seven types of named entities: person name, address name, organization name, date, time, monetary value and percentage. The main purpose of NER is to recognize and classify named entities in a text.

Since some named entities among above seven types of named entities, such as person name, address name and organization name , have characteristics of openness and development, and rules of forming these named entities is random, many miss-selections and wrong selections will occur in recognizing these named entities. Most of the studies on NER are focusing on the recognizing technique of these three named entities.

At present, a common NER method is a NER based on conditional random fields. In this method, the NER process is divided into two layers. A lower layer model of the conditional random field only uses observed values as conditions to recognize simple named entities. Thereafter, the recognized results are transmitted to a recognizing model on an upper layer. Thus, the input parameter of the upper layer model includes not only the observed values, but also the recognized results of the lower layer model, so as to lay a foundation for the upper layer model to recognize complex named entities.

During the implementation of the technical solution in the embodiments of the present application, however, the applicant found following disadvantage in the prior art.

Since the recognizing of the named entities only uses a two-layer model based on conditional random fields and does not consider whether the recognized named entities are correct, the recognizing is not accurate.

<u>Summary</u>

Since the recognizing of the named entities only uses a two-layer model basing on conditional random fields and does not consider whether the recognized named entities are correct, the recognizing is not accurate. The present invention provides a method and a device for recognizing named entities so as to solve this problem in the prior art.

The present invention provides following technical solutions by means of embodiments in this application.

In one aspect, the present invention provides follow technical solution by means of one embodiment in this application.

A method for generating a recognizing model for recognizing named entities comprising: obtaining a first characteristic information set of a text to be trained; training the first characteristic information set to obtain a first recognizing model; recognizing the first characteristic information set based on the first recognizing model to obtain a second characteristic information set which comprises M named entities obtained by recognizing the first characteristic information set through the first recognizing model, where M is an integer larger than or equal to 0; and training the second characteristic information set to obtain an error driving model.

Preferably, obtaining the first characteristic information set further comprises: obtaining a third characteristic information set of the text to be trained; training the third characteristic information set to obtain a third recognizing model; and recognizing the third characteristic information set based on the third recognizing model to obtain the first characteristic information set, wherein the first characteristic information set comprises N named entities obtained by recognizing the third characteristic information set through the third recognizing model, where N is an integer larger than or equal to 0 but less than or equal to M.

Preferably, obtaining the third characteristic information set further comprises: obtaining the text to be trained; dividing the text to be trained into at least one clause to be trained; obtaining a mark set for marking the at least one clause; and marking the at least one clause based on the mark set to obtain the third characteristic information set.

Preferably, the third characteristic information set comprises word boundary information, context information, part-of-speech information, character information and punctuation information in the at least one clause.

In another aspect, the present invention provides follow technical solution by means of another embodiment in this application.

A method for recognizing named entities comprising: obtaining a first characteristic information set of a text to be trained; recognizing the first characteristic information set based on the first recognizing model to obtain a second characteristic information set which comprises M named entities obtained by recognizing the first characteristic information set through the first recognizing model, wherein M is an integer larger than or equal to 0; and performing error-correction on the M named entities in the second characteristic information set based on the error driving model to obtain K named entities, where K is an integer lager than or equal to 0 but less than or equal to M.

Preferably, obtaining a first characteristic information set of a text to be trained further comprises: obtaining a third characteristic information set of a text to be trained; and recognizing the third characteristic information set based on the third recognizing model to obtain the first characteristic information set, wherein the first characteristic information set comprises N named entities obtained by recognizing the third characteristic information set through the third recognizing model, wherein N is an integer larger than or equal to 0 but less than or equal to M.

Preferably, the method further comprises: after performing error-correction on the M named entities in the second characteristic information set based on the error driving model to obtain the K named entities, obtaining category information, address information and past-of-speech information of the K named entities.

Preferably, obtaining the third characteristic information set of a text to be trained further comprises: obtaining the text to be recognized; dividing the text to be recognized into at least one clause to be recognized; obtaining a mark set for marking the at least one clause to be recognized; and marking the at least one clause based on the mark set to obtain the third characteristic information set.

Preferably, the first characteristic information set comprises word boundary information, context information, part-of-speech information, character information and punctuation information in the at least one clause.

In another aspect, the present invention provides follow technical solution by means of another embodiment in this application.

A device for generating a recognizing model for recognizing named entities comprising: a first characteristic information set obtaining module configured to obtain a first characteristic information set of a text to be trained; a first training module obtaining module configured to train the first characteristic information set to obtain a first recognizing model; a second characteristic information set obtaining module configured to recognize the first characteristic information set based on the first recognizing model to obtain a second characteristic information set which comprises M named entities obtained by recognizing the first characteristic information set through the first recognizing model, wherein M is an integer larger than or equal to 0; and an error driving model obtaining module configured to train the second characteristic information set to obtain an error driving model.

Preferably, the first characteristic information set obtaining module further comprises: a third characteristic information set obtaining unit configured to obtain a third characteristic information set of the text to be trained; a third recognizing model obtaining unit configured to train the third characteristic information set to obtain a third recognizing model; and a first characteristic information set obtaining unit configured to recognize the third characteristic information set based on the third recognizing model to obtain the first characteristic information set, wherein the first characteristic information set comprises N named entities obtained by recognizing the third characteristic information set through the third recognizing model, wherein N is an integer larger than or equal to 0 but less than or equal to M.

Preferably, the third characteristic information set obtaining unit comprises: a training text obtaining unit configured to obtain the text to be trained; a dividing unit configured to divide the text into at least one clause to be trained; a mark set obtaining unit configured to obtain a mark set for marking the at least one clause; and a marking unit configured to mark the at least one clause based on the mark set to obtain the third characteristic information set.

In another aspect, the present invention provides follow technical solution by means of another embodiment in this application.

A device for recognizing named entities comprising: a first characteristic information set obtaining module configured to obtain a first characteristic information set of a text to be trained; a second characteristic information set obtaining module configured to recognize the first characteristic information set of the text to be trained based on the first recognizing model to obtain a second characteristic information set which comprises M named entities obtained by recognizing the first characteristic information set through the first recognizing model, wherein M is an integer larger than or equal to 0; and an error-correcting module configured to perform error-correction on the M named entities in the second characteristic information set based on the error driving model to obtain K named entities, wherein K is an integer lager than or equal to 0 but less than or equal to M.

Preferably, the first characteristic information set obtaining module comprises: a third characteristic information set obtaining unit configured to obtain a third characteristic information set of a text to be trained; and a first characteristic information set obtaining module unit configured to recognize the third characteristic information set based on the third recognizing model to obtain the first characteristic information set, wherein the first characteristic information set comprises N named entities obtained by recognizing the third characteristic information set through the third recognizing model, wherein N is an integer larger than or equal to 0 but less than or equal to M.

Preferably, the device further comprises a K named entities information unit configured to obtain category information, address information and past-of-speech information of the K named entities after performing error-correction on the M named entities in the second characteristic information set based on the error driving model to obtain the K named entities.

Preferably, the third characteristic information set obtaining unit comprises: a recognizing text obtaining unit configured to obtain the text to be recognized; a dividing unit configured to divide the text into at least one clause to be recognized; a mark set obtaining unit configured to obtain a mark set for marking the at least one clause; and a marking unit configured to mark the at least one clause based on the mark set to obtain the third characteristic information set.

One or more technical solutions of the above embodiment have following effects or advantages.

By using a technical solution in which a error-correction is performed on the named entities , which is recognized by the condition random field model, by using error driving model on the basis of recognizing named entities, a technical effect of improving the accuracy of NER is achieved. Specifically, the accuracy of recognizing simple named entities can achieve 97.35%, and the accuracy of recognizing complex named entities can achieve 87.6%.

**Brief Description of the Drawing**

Fig. 1 is a flow diagram of a method for generating a recognizing model for recognizing named entities according to a first embodiment of the present application.

Fig. 2 is a flow diagram of obtaining a first characteristic information set of a text to be trained according to the first embodiment of the present application.

Fig. 3 is a flow diagram of obtaining a third characteristic information set of a text to be trained according to the first embodiment of the present application.

Fig.4 is a standard mode of the first characteristic information set of the text to be trained according to the first embodiment and a text to be recognized in a second embodiment.

Fig. 5 is a flow diagram of a method for recognizing named entities according to the second embodiment of the present application.

Fig. 6 is a flow diagram of obtaining a first characteristic information set of a text to be recognized according to the second embodiment of the present application.

Fig. 7 is a flow diagram of obtaining a first characteristic information set of a text to be recognized according to the second embodiment of the present application.

Fig. 8 is a block diagram of a device for generating a recognizing model for recognizing named entities according to a third embodiment of the present application.

Fig. 9 is a block diagram of a device for recognizing named entities according to a fourth embodiment of the present application.

**Detailed Description**

In order to make those skilled in the art better understand the present application, the technical solution thereof will be described in detail by means of example in conjunction with the appended figures.

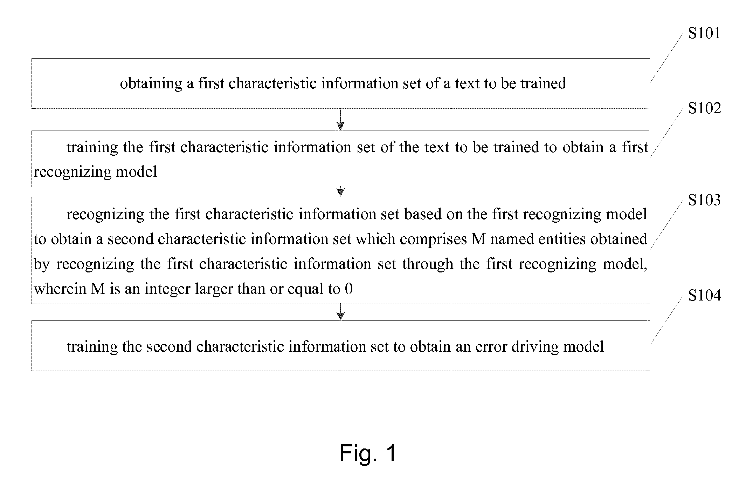

Referring to Figs.1-4, the first embodiment of the present application provides a method for generating a recognizing model for recognizing named entities.

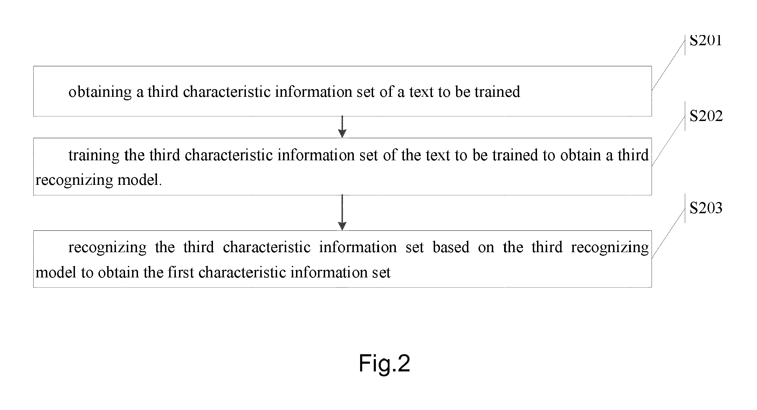

The method comprises a step S101 of obtaining a first characteristic information set of a text to be trained. As shown in Fig.2, the step of obtaining the first characteristic information set of a text to be trained further comprises a step S201 of obtaining a third characteristic information set of a text to be trained.

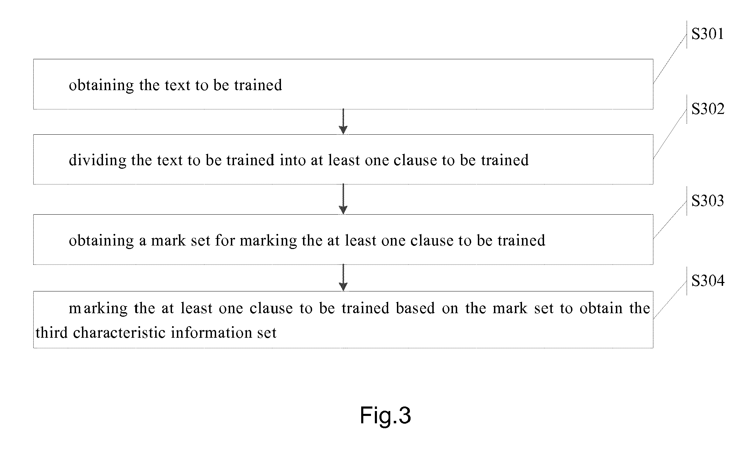

As shown in Fig.3, the step of step S201 particularly comprises a step S301 of obtaining the text to be trained, a step S302 of dividing the text to be trained into at least one clause to be trained, a step S303 of obtaining a mark set for marking the at least one clause to be trained, and a step S304 of marking the at least one clause to be trained based on the mark set to obtain the third characteristic information set.

The third characteristic information set particularly comprises word boundary information, context information, part-of-speech information, character information and punctuation information in the at least one clause.

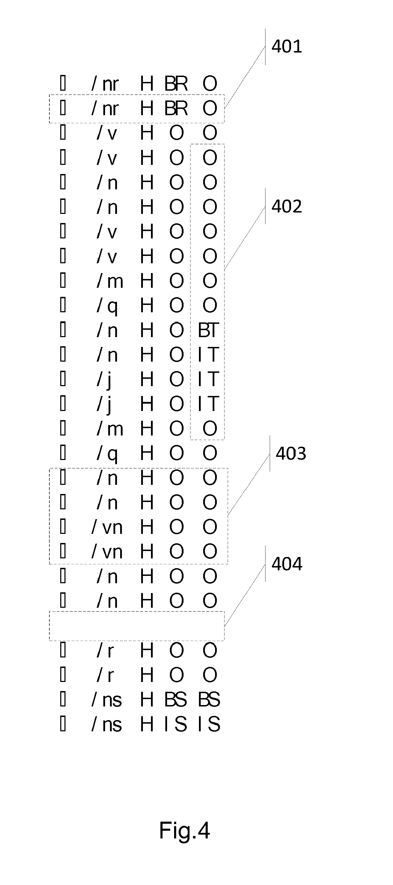

In a specific implementation, as shown in Fig.4, it is assumed that the text to be trained is

"乔石主持会议通过九届全国人大一次会议有关议案本报北京".'

This text is first divided into clauses to be trained based on a certain rule.

Empty row 404 means a split line between each of clauses to be trained.

Then the mark set for marking the at least one clause by a user can be obtained. In the first embodiment of the present application, the mark set has following form:

$$C = \{BR, \ IR, \ BT, \ IT, \ BS, \ IS, \ BZ, \ IZ\}$$

wherein,
BR marks the first character of a person name;
IR marks other characters of the person name;
BT marks the first character of an organization name;
IT marks other characters of the organization name;
BS marks the first character of an address name;
IS marks other characters of the address name;
BZ marks the first character of a named entity of another type;
IZ marks other characters of the named entity of another type;

However, in a specific implementation, the form of the mark set is not limited to C = {BR, IR, BT, IT, BS, IS, BZ, IZ}. If a mark selected by those skilled in the art can achieve the same technical effect as that of the present application, this mark should be considered as be within the scope of the concept of the present application.

By marking as above, the text to be trained is transformed into the third characteristic information set with a form required by the condition random field training, as shown in Fig.4, wherein 401 means the characteristic information of one character, 402 is a mark set for characters, and 403 means the characteristic information of a plurality of characters.

In a specific implementation, the third characteristic information set required by the condition random field training is not limited to the form shown in Fig.4. Some parameters can be added or removed according to the practical situation. If a first characteristic information set selected by those skilled in the art can achieve the same technical effect as that of the present application, this first characteristic information set should be considered as be within the scope of the concept of the present application.

The step of obtaining the first characteristic information set of a text to be trained further comprises a step S202 of training the third characteristic information set of the text to be trained to obtain a third recognizing model.

In a specific implementation, training the third characteristic information set is based on a third characteristic template.

The step of obtaining the first characteristic information set of a text to be trained further comprises a step S203 of recognizing the third characteristic information set based on the third recognizing model to obtain the first characteristic information set, wherein the first characteristic information set comprises N named entities obtained by recognizing the third characteristic information set through the third recognizing model, wherein N is an integer larger than or equal to 0 but less than or equal to M.

The method further comprises a step S102 of training the first characteristic information set of the text to be trained to obtain a first recognizing model.

In a specific implementation, training the first characteristic information set is based on a first characteristic template.

The method further comprises a step S103 of recognizing the first characteristic information set based on the first recognizing model to obtain a second characteristic information set which comprises M named entities obtained by recognizing the first characteristic information set through the first recognizing model, wherein M is an integer larger than or equal to 0.

The method further comprises a step S104 of training the second characteristic information set to obtain an error driving model.

In a specific implementation, training the second characteristic information set is based on a second characteristic template.

In addition, the obtained error driving model is mainly used to determine whether there are recognizing errors in the M named entities obtained in the second characteristic information set.

In a specific implementation, the first characteristic template, the second characteristic template, and the third characteristic template can be optimized in a plurality of characteristic templates for many times, and a characteristic template with the best recognizing effect is selected. A particular optimizing manner could be as follow: after recognizing the first characteristic information set based on the first characteristic template to obtain a simple recognizing model, recognizing the model; then adjusting the first characteristic template and recognizing the first characteristic information set again; repeating above step, thereby selecting a optimum first characteristic template, the selecting process of the second characteristic template and the third characteristic template are similar to that of the first one. Another particular optimizing manner could be as follow: selecting the first characteristic template, the second characteristic template and the third characteristic template; then recognizing the first characteristic information set to obtain a simple recognizing model, a complex recognizing model and error driving model; finally perform recognizing collectively to select an optimum characteristic template. However, the selecting manner of the first characteristic template, the second characteristic template and the third characteristic template is not limited to the above manner. If a first characteristic template, a second characteristic template and a third characteristic template selected by those skilled in the art can achieve the same technical effect as that of the present application, these characteristic templates should be considered as be within the scope of the concept of the present application.

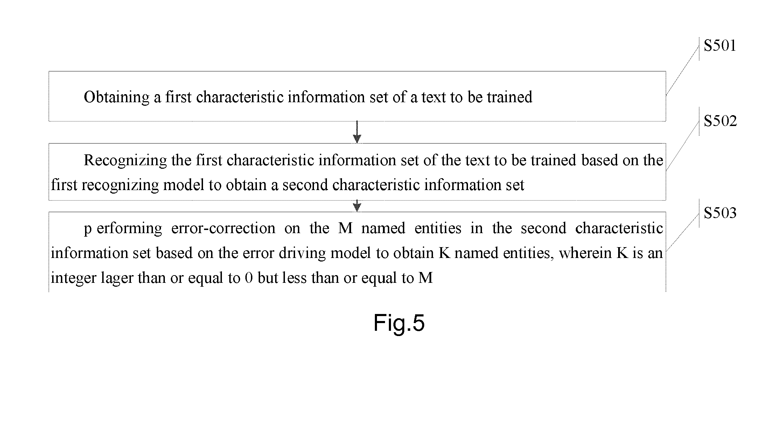

Referring to Fig.5, the second embodiment of the present application provides a method for recognizing named entities. The method comprises a step S501 of obtaining a first characteristic information set of a text to be trained.

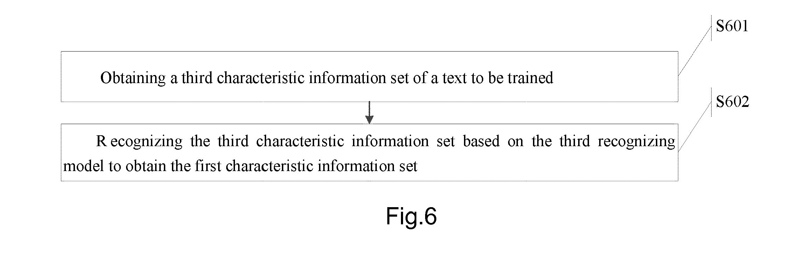

As shown in Fig.6, the step S501 of obtaining the first characteristic information set of a text to be trained further comprises a step S601 of obtaining a third characteristic information set of a text to be trained.

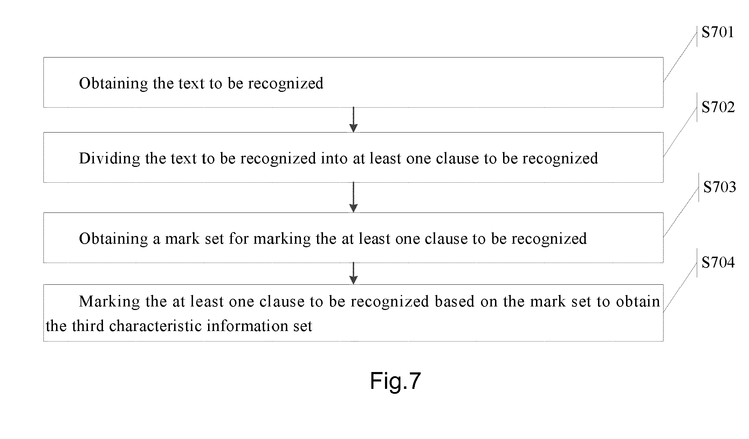

As shown in Fig.7, the step of S601 particularly comprises step S701 of obtaining the text to be recognized, a step S702 of dividing the text to be recognized into at least one clause to be recognized, a step S703 of obtaining a mark set for marking the at least one clause to be recognized, and a step S704 of marking the at least one clause to be recognized based on the mark set to obtain the third characteristic information set.

The third characteristic information set further comprises word boundary information, context information, part-of-speech information, character information and punctuation information in the at least one clause.

In a specific implementation, the process of obtaining the third characteristic information set of the text to be recognized is similar to the process of obtaining the first characteristic information set of the text to be trained. For example, it is assumed that the text to be trained is

<p style="text-align:center">"乔石主持会议通过九届全国人大一次会议有关议案本报北京".</p>

This text is first transformed into a form of the third characteristic information set shown in Fig.4. Obviously, in a specific implementation, the processes of generating the third characteristic information set of the text to be trained and generating the third characteristic information set of the text to be recognized are totally different. Thus, under different condition factors, the generated third characteristic information set of the text to be trained and the generated third characteristic information set of the text to be recognized may be different, even if the two texts are same.

The step S501 of obtaining the first characteristic information set of a text to be trained further comprises a step S602 of recognizing the third characteristic information set based on the third recognizing model to obtain the first characteristic information set, wherein the first characteristic information set comprises N named entities obtained by recognizing the third characteristic information set through the third recognizing model, wherein N is an integer larger than or equal to 0 but less than or equal to M.

The method further comprises a step S502 of recognizing the first characteristic information set of the text to be trained based on the first recognizing model to obtain a second characteristic information set which comprises M named entities obtained by recognizing the first characteristic information set through the first recognizing model, wherein M is an integer larger than or equal to 0.

In a specific implementation, the named entities recognized by the second recognizing model are simple and easily recognized named entities among all the named entities. It is assumed that the named entities obtained by recognizing above text to be recognized based on the second recognizing model is "乔石" and "北京". These two named entities are first marked in the second characteristic information set. The marking manner is the same as that of the first characteristic information set, i.e., by using the mark set C. Obviously, other marking manner that can be recognized by the first recognizing model can also be used.

The method further comprises a step S503 of performing error-correction on the M named entities in the second characteristic information set based on the error driving model to obtain K named entities, wherein K is an integer lager than or equal to 0 but less than or equal to M.

Since incorrect named entities may exist in the named entities that are recognized based on the first recognizing model and the second recognizing model, these incorrect named entities should be corrected based on the error driving model. For example, above three recognized named entities "乔石", "北京" and "全国人" are subjected to the error-correction process. The named entity "全国人" are determined by the error driving model as an incorrect named entity and corrected to be "全国人大". Thus, the finally obtained named entities are "乔石", "北京"

and "全国人大".

In addition, the method further comprises a step of obtaining category information, address information and past-of-speech information of the K named entities after performing error-correction on the M named entities in the second characteristic information set based on the error driving model to obtain the K named entities.

In a specific implementation, since the recognized named entities may not be used directly, various attribute information, such as category information, address information and past-of-speech information, should be extracted to satisfy various requirements in different situations. Obviously, in a specific implementation, the extracted information is not limited to the category information, address information and past-of-speech information of the named entities. If attribute information extracted by those skilled in the art can achieve the same technical effect as that of the present application, the attribute information should be considered as be within the scope of the concept of the present application.

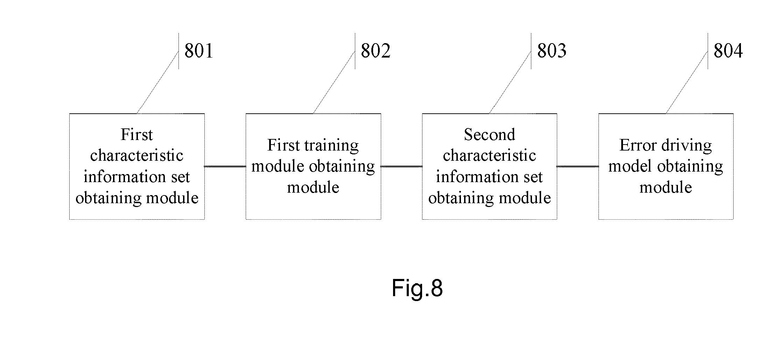

Referring to Fig.8, the third embodiment of the present application provides a device for generating a recognizing model for recognizing named entities. As shown in Fig.8, the device comprises a first characteristic information set obtaining module 801 configured to obtain a first characteristic information set of a text to be trained.

The first characteristic information set obtaining module 801 further comprises a third characteristic information set obtaining unit configured to obtain a third characteristic information set of the text to be trained.

The third characteristic information set obtaining unit particularly comprises a training text obtaining unit configured to obtain the text to be trained, a dividing unit configured to divide the text into at least one clause to be trained, a mark set obtaining unit configured to obtain a mark set for marking the at least one clause, and a marking unit configured to mark the at least one clause based on the mark set to obtain the third characteristic information set.

The first characteristic information set obtaining module 801 further comprises a third recognizing model obtaining unit configured to train the third characteristic information set of the text to be trained to obtain a third recognizing model.

The first characteristic information set obtaining module 801 further comprises a first characteristic information set obtaining unit configured to recognize the third characteristic information set based on the third recognizing model to obtain the first characteristic information set, wherein the first characteristic information set comprises N named entities obtained by recognizing the third characteristic information set through the third recognizing model, wherein N is an integer larger than or equal to 0 but less than or equal to M.

The device further comprises a first training module obtaining module 802 configured to train the first characteristic information set of the text to be trained to obtain a first recognizing model.

The device further comprises a second characteristic information set obtaining module 803 configured to recognize the first characteristic information set based on the first recognizing model to obtain a second characteristic information set which comprises M named entities obtained by recognizing the first characteristic information set through the first recognizing model, wherein M is an integer larger than or equal to 0.

The device further comprises an error driving model obtaining module 804 configured to train the second characteristic information set to obtain an error driving model.

Since the device in the third embodiment of the present invention corresponds to the method in the first embodiment of the present invention, those skilled in the art can realize the specific implementation of the device in the third embodiment and the variation thereof based on the method in the first embodiment. Thus, the operation of the device is omitted here. All devices based on the method in the first embodiment are considered as be within the scope of the present application.

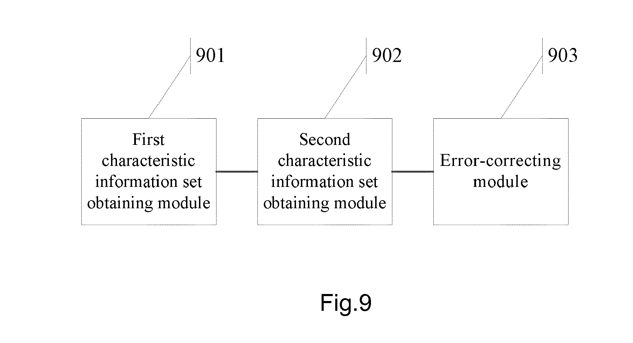

Referring to Fig.9, the fourth embodiment of the present application provides a device for recognizing named entities. This device comprises a first characteristic information set obtaining module 901 configured to obtain a first characteristic information set of a text to be trained.

The first characteristic information set obtaining module 901 mainly comprises a third characteristic information set obtaining unit configured to obtain a third characteristic information set of a text to be trained.

The third characteristic information set obtaining unit comprises a recognizing text obtaining unit configured to obtain the text to be recognized, a dividing unit configured to divide the text to be recognized into at least one clause to be recognized, a mark set obtaining unit configured to obtain a mark set for marking the at least one clause to be recognized, and a marking unit configured to mark the at least one clause to be recognized based on the mark set to obtain the third characteristic information set.

The first characteristic information set obtaining module 901 further comprises a first characteristic information set obtaining module unit configured to recognize the third characteristic information set based on the third recognizing model to obtain the first characteristic information set, wherein the first characteristic information set comprises N named entities obtained by recognizing the third characteristic information set through the third recognizing model, wherein N is an integer larger than or equal to 0 but less than or equal to M.

The device further comprises a second characteristic information set obtaining module 902 configured to recognize the first characteristic information set of the text to be trained based on the first recognizing model to obtain a second characteristic information set which comprises M named entities obtained by recognizing the first characteristic information set through the first recognizing model, wherein M is an integer larger than or equal to 0.

The device further comprises an error-correcting module 903 configured to perform error-correction on the M named entities in the second characteristic information set based on the error driving model to obtain K named entities, wherein K is an integer lager than or equal to 0 but less than or equal to M.

In addition, the device further comprises a K named entities information unit configured to obtain category information, address information and past-of-speech information of the K named entities after performing error-correction on the M named entities in the second characteristic information set based on the error driving model to obtain the K named entities.

Since the device in the fourth embodiment of the present invention corresponds to the method in the second embodiment of the present invention, those skilled in the art can realize the specific implementation of the device in the fourth embodiment and the variation thereof based on the method in the second embodiment. Thus, the operation of the device is omitted here. All devices based on the method in the second embodiment are considered as be within the scope of the present application.

One or more technical solutions of the above embodiment have following effects or advantages.

By using a technical solution in which a error-correction is performed on the named entities recognized by the condition random field model using error driving model on the basis of recognizing named entities based on a condition random field model, a technical effect of improving the accuracy of NER is achieved.

The disclosed and other embodiments and the functional operation described in the present specification could be implemented by a digital circuit or a computer software, firmware or hardware comprising the disclosed structure in the present specification and its equivalent, or by one or more combination thereof. The disclosed and other embodiments could be implemented as one or more computer program products, i.e. one or more modules of computer instructions coded on a computer-readable medium so that the data processing means could perform or control its operations. The computer-readable medium may be a machine readable storage device, a machine readable storage chip, a memory device, synthetic material influencing machine readable transmitted signals or one or more combinations thereof. The term "data processing means" comprises all means, devices and machines for data processing, for example comprising programmable processor, computer, a plurality of processors or computers. In addition to hardware, the means may include codes for creating the execution environment of computer programs discussed, for example constituting firmware of processor, protocol stack, database management system and operation system or codes for constituting one or more combinations thereof. Transmitted signal may be an artificial signal, such as a electrical, optical or electromagnetic signal generated by machines, which is generated to encode messages so as to be transmitted to an appropriate receiver means.

The computer program (also referred to as program, software, software application, script or code) may be written in any programming language including compiler or interpreted language, and also may be arranged in any form including independent program or module, component, subprogram or other unit adapted to be used in a computer environment. It may not be necessary for the computer program to be corresponding to documents in the document system. The program may be stored in a part of the document of other program or data (e.g. one or more scripts stored in markup language documents), a single document dedicated to the discussed program, or a plurality of collaborative documents (e.g. documents storing one or more modules, subprograms or code parts). The computer program could be arranged to be performed on a computer or a plurality of computers located in one position or distributed among many locations and interconnected via communication net.

The processes and logical flows described in the Specification can be carried out by one or more of the programmable processor which performs one or more computer programs to operate the input data and generate outputs to perform functions. The processes and logical flows can also be carried out by logic circuits with special functions, such as FPGA (field programmable gate array) and ASIC (application-specific integrated circuit), and devices can also be carried out by the logic circuits with special functions.

The processes and logical flows described in the Specification can be carried out by performing one or more computer programs with one or more of the programmable processor operating the input data and generating outputs to perform functions. The processes and logical flows can also be carried out by logic circuits with special functions, such as FPGA (field programmable gate array) and ASIC (application-specific integrated circuit), and devices can also be carried out by the logic circuits with special function.

As an example, a processor suitable for execution of computer programs includes microprocessors for general and special purpose, and any one or more of processors of any type of digital computers. Generally, the processor receives instructions and data from read-only memory or random access memory or both. A basic element of a computer is a process for executing instructions and one or more storage devices for storing instructions and data. Generally, the computer also includes one or more mass storage, such as magnetic or optical disk, for storing instructions and data, operatively coupled to one or more mass storage for receiving date therefrom or transmitting data thereto, or both. However, the computer does not need to have such devices. Computer readable medium suitable for storing computer program instructions and data includes all types of nonvolatile memory, media and storage devices, for example, including:

semiconductor storage device, such as EPROM, EEPROM and flash memory devices; magnetic disk, such as internal hard disk or mobile hard disk: magnetic or optical disk; and CD-ROM and DVD-ROM. Special purpose logic circuits can be supplemented or combined into the processor and memory.

In order to provide the interaction with users, the disclosed embodiments can be implemented on a computer, which comprises a display device such as a CRT (cathode ray tube) or LCD (liquid crystal display) monitor and a keyboard and a pointing device such as a mouse or trackball, with which the user can input to the computer. Other types of devices can be used to provide the interaction with the user. For example, a feedback provided to the user can be any form of a sensitive feedback, such as visual feedback, audio feedback or tactile feedback, and the input from the user can be received in any form, including sound, voice, or touch input.

The disclosed embodiments be implemented on a computing system including a back-end component such as a data server, or a middle component such as an application server component, or a front-end component such as a client computer component, or any combination of one or more of the back-end component, the middle component, and the front-end component, the client computer has a graphical user interface (GUI) or a Web browser, through which users can interact with the disclosed embodiments. The components of the system can be interconnected through any or digital data communication medium of the communication network. Examples of the communication network include a local area network (LAN) and a wide area network (WAN), such as the Internet.

The system for implementing the disclosed embodiment can include a client computer (client) and a server computer (server).The client and the server normally are away from each other and typically interact with each other through a communication network. The relationship between the client and the server can be occurred by computer programs running on their respective computer and having a client-server relationship with each other.

Although the specification includes many specific content, but this content does not constitute any restriction to the present inventions or required scope, but is used as a specific example of the description of the specific features. In this Specification, a feature described under the context of one embodiment can be implemented in a combined manner in one embodiment. On the contrary, a feature described under the context of one embodiment can be implemented separately or in any appropriate combination in multiple embodiments. In addition, features can be described to function in combinations, even in the original requirement, but in some situations, one or more features from a required combination can be removed from the combination, and the required combination can be aimed to a sub-combination or the variation of the sub-combination.

Similarly, while operations, in figures, are illustrated in a specific order, but this should not be understood as requiring the illustrated operations to be performed in a particular order or a continuous order to achieve the desired results. In some cases, multitasking and parallel processing is advanced. In addition, the division of the system components in the disclosed embodiments should not be understood as requiring making such division in all embodiments. The described program component and system can be integrated together or enclosed into more than one soft product.

Although the specific embodiments have been described, other embodiments remain within the scope of appended claims.

Although the preferred embodiments of the present invention have been described, many modifications and changes may be possible once those skilled in the art get to know some basic inventive concepts. The appended claims are intended to be construed comprising these preferred embodiments and all the changes and modifications fallen within the scope of the present invention.

It will be apparent to those skilled in the art that various modifications and variations could be made to the present application without departing from the spirit and scope of the present invention. Thus, if any modifications and variations lie within the spirit and principle of the present application, the present invention is intended to include these modifications and variations.

**Claims**

1. A method for generating a recognizing model for recognizing named entities, comprising:

obtaining a first characteristic information set of a text to be trained;
training the first characteristic information set to obtain a first recognizing model;
recognizing the first characteristic information set based on the first recognizing model to obtain a second characteristic information set, the obtained second characteristic information set comprising M named entities obtained by recognizing the first characteristic information set based on the first recognizing model, where M is an integer larger than or equal to 0; and
training the second characteristic information set to obtain an error driving model.

2. The method according to claim 1, wherein the step of obtaining the first characteristic information set further comprises:

    obtaining a third characteristic information set of the text;
    training the third characteristic information set to obtain a third recognizing model; and
    recognizing the third characteristic information set based on the third recognizing model to obtain the first characteristic information set, wherein the first characteristic information set comprises N named entities obtained by recognizing the third characteristic information set through the third recognizing model, where N is an integer larger than or equal to 0 but less than or equal to M.

3. The method according to claim 2, wherein the step of obtaining the third characteristic information set further comprises:

    obtaining the text to be trained;
    dividing the text to be trained into at least one clause to be trained;
    obtaining a mark set for marking the at least one clause; and
    marking the at least one clause based on the obtained mark set to obtain the third characteristic information set.

4. The method according to claim 2 or 3, wherein the third characteristic information set comprises word boundary information, context information, part-of-speech information, character information and punctuation information in the at least one clause.

5. A method for recognizing named entities, comprising:

    obtaining a first characteristic information set of a text to be trained;
    recognizing the first characteristic information set based on the first recognizing model to obtain a second characteristic information set, , the obtained second characteristic information set comprising M named entities obtained by recognizing the first characteristic information set through the first recognizing model, where M is an integer larger than or equal to 0; and
    performing error-correction on the M named entities in the second characteristic information set based on the error driving model to obtain K named entities, where K is an integer lager than or equal to 0 but less than or equal to M.

6. The method according to claim 5, wherein the step of obtaining a first characteristic information set of a text to be trained further comprises:

    obtaining a third characteristic information set of a text to be trained; and
    recognizing the third characteristic information set based on the third recognizing model to obtain the first characteristic information set, wherein the first characteristic information set comprises N named entities obtained by recognizing the third characteristic information set based on the third recognizing model, where N is an integer larger than or equal to 0 but less than or equal to M.

7. The method according to claim 5, wherein the method further comprises:

    after performing error-correction on the M named entities in the second characteristic information set based on the error driving model to obtain the K named entities, obtaining category information, address information and past-of-speech information of the K named entities.

8. The method according to claim 6, wherein the step of obtaining the third characteristic information set of a text to be trained further comprises:

    obtaining the text to be recognized;
    dividing the text to be recognized into at least one clause to be recognized;
    obtaining a mark set for marking the at least one clause to be recognized; and
    marking the at least one clause based on the mark set to obtain the third characteristic information set.

9. The method according to claim 7 or 8, wherein the first characteristic information set comprises word boundary information, context information, part-of-speech information, character information and punctuation information in the at least one clause.

**10.** A device for generating a recognizing model for recognizing named entities, comprising:

a first characteristic information set obtaining module configured to obtain a first characteristic information set of a text to be trained;

a first training module obtaining module configured to train the first characteristic information set to obtain a first recognizing model;

a second characteristic information set obtaining module configured to recognize the first characteristic information set based on the first recognizing model to obtain a second characteristic information set which comprises M named entities obtained by recognizing the first characteristic information set through the first recognizing model, wherein M is an integer larger than or equal to 0; and

an error driving model obtaining module configured to train the second characteristic information set to obtain an error driving model.

**11.** The device according to claim 10, wherein the first characteristic information set obtaining module further comprises:

a third characteristic information set obtaining unit configured to obtain a third characteristic information set of the text to be trained;

a third recognizing model obtaining unit configured to train the third characteristic information set to obtain a third recognizing model; and

a first characteristic information set obtaining unit configured to recognize the third characteristic information set based on the third recognizing model to obtain the first characteristic information set, wherein the first characteristic information set comprises N named entities obtained by recognizing the third characteristic information set through the third recognizing model, where N is an integer larger than or equal to 0 but less than or equal to M.

**12.** The device according to claim 11, wherein the third characteristic information set obtaining unit comprises:

a training text obtaining unit configured to obtain the text to be trained;

a dividing unit configured to divide the text into at least one clause to be trained;

a mark set obtaining unit configured to obtain a mark set for marking the at least one clause; and

a marking unit configured to mark the at least one clause based on the mark set to obtain the third characteristic information set.

**13.** A device for recognizing named entities, comprising:

a first characteristic information set obtaining module configured to obtain a first characteristic information set of a text to be trained;

a second characteristic information set obtaining module configured to recognize the first characteristic information set of the text to be trained based on the first recognizing model to obtain a second characteristic information set which comprises M named entities obtained by recognizing the first characteristic information set through the first recognizing model, wherein M is an integer larger than or equal to 0; and

an error-correcting module configured to perform error-correction on the M named entities in the second characteristic information set based on the error driving model to obtain K named entities, where K is an integer lager than or equal to 0 but less than or equal to M.

**14.** The device according to claim 13, wherein the first characteristic information set obtaining module comprises:

a third characteristic information set obtaining unit configured to obtain a third characteristic information set of a text to be trained; and

a first characteristic information set obtaining module unit configured to recognize the third characteristic information set based on the third recognizing model to obtain the first characteristic information set, wherein the first characteristic information set comprises N named entities obtained by recognizing the third characteristic information set through the third recognizing model, where N is an integer larger than or equal to 0 but less than or equal to M.

**15.** The device according to claim 13, further comprises a K named entities information unit configured to obtain category information, address information and past-of-speech information of the K named entities after performing error-correction on the M named entities in the second characteristic information set based on the error driving model to obtain the K named entities.

16. The device according to claim 14, wherein the third characteristic information set obtaining unit comprises:

a recognizing text obtaining unit configured to obtain the text to be recognized;
a dividing unit configured to divide the text into at least one clause to be recognized;
a mark set obtaining unit configured to obtain a mark set for marking the at least one clause; and
a marking unit configured to mark the at least one clause based on the mark set to obtain the third characteristic information set.

S101

obtaining a first characteristic information set of a text to be trained

S102

training the first characteristic information set of the text to be trained to obtain a first recognizing model

S103

recognizing the first characteristic information set based on the first recognizing model to obtain a second characteristic information set which comprises M named entities obtained by recognizing the first characteristic information set through the first recognizing model, wherein M is an integer larger than or equal to 0

S104

training the second characteristic information set to obtain an error driving model

Fig. 1

S201

obtaining a third characteristic information set of a text to be trained

S202

training the third characteristic information set of the text to be trained to obtain a third recognizing model.

S203

recognizing the third characteristic information set based on the third recognizing model to obtain the first characteristic information set

Fig.2

obtaining the text to be trained

S301

dividing the text to be trained into at least one clause to be trained

S302

obtaining a mark set for marking the at least one clause to be trained

S303

marking the at least one clause to be trained based on the mark set to obtain the third characteristic information set

S304

Fig.3

□　/ nr　H　BR　O　　401
□　/ nr　H　BR　O
□　/ v　H　O　O
□　/ v　H　O　O
□　/ n　H　O　O
□　/ n　H　O　O　　402
□　/ v　H　O　O
□　/ v　H　O　O
□　/ m　H　O　O
□　/ q　H　O　O
□　/ n　H　O　BT
□　/ n　H　O　IT
□　/ j　H　O　IT
□　/ j　H　O　IT
□　/ m　H　O　O
□　/ q　H　O　O　　403
□　/ n　H　O　O
□　/ n　H　O　O
□　/ vn　H　O　O
□　/ vn　H　O　O
□　/ n　H　O　O　　404
□　/ n　H　O　O

□　/ r　H　O　O
□　/ r　H　O　O
□　/ ns　H　BS　BS
□　/ ns　H　IS　IS

Fig.4

EP 2 752 776 A1

Obtaining a first characteristic information set of a text to be trained

S501

Recognizing the first characteristic information set of the text to be trained based on the first recognizing model to obtain a second characteristic information set

S502

p erforming error-correction on the M named entities in the second characteristic information set based on the error driving model to obtain K named entities, wherein K is an integer lager than or equal to 0 but less than or equal to M

S503

Fig.5

S601

Obtaining a third characteristic information set of a text to be trained

S602

Recognizing the third characteristic information set based on the third recognizing model to obtain the first characteristic information set

Fig.6

S701

Obtaining the text to be recognized

S702

Dividing the text to be recognized into at least one clause to be recognized

S703

Obtaining a mark set for marking the at least one clause to be recognized

S704

Marking the at least one clause to be recognized based on the mark set to obtain the third characteristic information set

Fig.7

801

802

803

804

| First characteristic information set obtaining module | First training module obtaining module | Second characteristic information set obtaining module | Error driving model obtaining module |

Fig.8

First characteristic information set obtaining module — 901

Second characteristic information set obtaining module — 902

Error-correcting module — 903

Fig.9

# INTERNATIONAL SEARCH REPORT

| International application No. |
| --- |
| **PCT/CN2012/086562** |

**A. CLASSIFICATION OF SUBJECT MATTER**

G06F 17/30 (2006.01) i

According to International Patent Classification (IPC) or to both national classification and IPC

**B. FIELDS SEARCHED**

Minimum documentation searched (classification system followed by classification symbols)

IPC: G06F 17/-

Documentation searched other than minimum documentation to the extent that such documents are included in the fields searched

Electronic data base consulted during the international search (name of data base and, where practicable, search terms used)

CNKI, CPRSABS, CNTXT, EPODOC: naming; named, entity, recognized, NER, error driven, transformation based, learning, TBL, training

**C. DOCUMENTS CONSIDERED TO BE RELEVANT**

| Category* | Citation of document, with indication, where appropriate, of the relevant passages | Relevant to claim No. |
| --- | --- | --- |
| X | YIN, Jinling et al., Research on the Part-of-Speech Tagging Method—POS Tagging Using Conditional Random Fields and Transformation Based Learning, NEW TECHNOLOGY OF LIBRARY AND INFORMATION SERVICE, March 2009, no. 3, pages 46-51, ISSN 1003-3513 | 1-16 |
| A | CN 101075228 A (PANASONIC CORPORATION), 21 November 2007 (21.11.2007), the whole document | 1-16 |
| A | CN 1977261 A (AGENCY FOR SCIENCE, TECHNOLOGY AND RESEARCH), 06 June 2007 (06.06.2007), the whole document | 1-16 |

☐ Further documents are listed in the continuation of Box C.   ☒ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 March 2013 (04.03.2013) | **28 March 2013 (28.03.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Yuanye** Telephone No.: (86-10) **62411751** |
| --- | --- |

Form PCT/ISA/210 (second sheet) (July 2009)

## INTERNATIONAL SEARCH REPORT
Information on patent family members

International application No.

**PCT/CN2012/086562**

| Patent Documents referred in the Report | Publication Date | Patent Family | Publication Date |
|---|---|---|---|
| CN 101075228 A | 21.11.2007 | CN 101075228 B | 23.05.2012 |
|  |  | WO 2007137487 A1 | 06.12.2007 |
|  |  | US 2009326923 A1 | 31.12.2009 |
| CN 1977261 A | 06.06.2007 | WO 2005116866 A1 | 08.12.2005 |
|  |  | US 20110246076 A1 | 06.10.2011 |
|  |  | CN 1977261 B | 05.05.2010 |
|  |  | GB 2432448 A | 23.05.2007 |

Form PCT/ISA/210 (patent family annex) (July 2009)